**Europäisches Patentamt**

**European Patent Office**

**Office européen des brevets**

(11) Numéro de publication: **0 217 708**
**B1**

(12) **FASCICULE DE BREVET EUROPEEN**

(45) Date de publication du fascicule du brevet:
**17.11.88**

(21) Numéro de dépôt: **86402044.1**

(22) Date de dépôt: **18.09.86**

(51) Int. Cl.⁴: **B 65 G 43/08**

(54) **Dispositif de détection d'une feuille de verre.**

(30) Priorité: **18.09.85 FR 8513801**

(43) Date de publication de la demande:
**08.04.87 Bulletin 87/15**

(45) Mention de la délivrance du brevet:
**17.11.88 Bulletin 88/46**

(84) Etats contractants désignés:
**CH DE FR GB IT LI SE**

(56) Documents cités:
**DE - B - 1 900 988**
**FR - A - 2 263 180**
**US - A - 3 942 623**
**US - A - 4 071 344**

(73) Titulaire: **SAINT-GOBAIN VITRAGE, Les
Miroirs 18, avenue d'Alsace, F-92400 Courbevoie (FR)**

(72) Inventeur: **Petitcollin, Jean-Marc, 12, rue de Verdun Le
Plessis Brion, F-60150 Thourotte (FR)**
Inventeur: **Perin, Francis, 6, rue Pasteur Margny les
Compiègne, F-60200 Compiegne (FR)**

(74) Mandataire: **Leconte, Jean-Gérard et al, Saint-Gobain
Recherche 39, Quai Lucien Lefranc,
F-93304 Aubervilliers Cedex (FR)**

ACTORUM AG

## Description

L'invention a trait à la détection précise d'une feuille de verre en mouvement. Elle propose un dispositif de détection mécanique du passage en un point donné d'une feuille de verre véhiculée sur un convoyeur. Le dispositif de détection selon l'invention s'applique notamment aux installations de formage ou de traitement thermique des feuilles de verre.

La plupart des traitements effectués sur des feuilles de verre ne peuvent être réalisés correctement que si la feuille de verre est parfaitement repérée et immobilisée en un point précis de la chaîne de traitement.

Ainsi, pour communiquer à des feuilles de verre un rayon de courbure donné, il est usuel de les échauffer individuellement dans un four tunnel, transporter par un convoyeur, puis de les transférer de ce convoyeur à un squelette de bombage ou une presse de bombage. Le plus délicat dans cette opération est la réalisation d'un transfert n'entraînant pas la création de marques ou de défauts optiques sur du verre porté à sa température de ramollissement.

De nombreux auteurs se sont attachés à l'amélioration des dispositifs de transfert. Dans tous les cas, le transfert est réalisé par la succession des étapes suivantes: immobilisation de la feuille de verre véhiculée sur un convoyeur horizontal, déplacement vertical de la feuille de verre aspirée et/ou soulevée par une pression gazeuse, amenée sous la feuille de verre du dispositif de bombage proprement dit, chute — éventuellement contrôlée — de la feuille de verre qui est alors prise en charge par ce dispositif de bombage.

Un bon placement final de la feuille de verre n'est possible que si son immobilisation lors de la première étape est parfaitement contrôlée, ce qui signifie que le convoyeur doit arrêter brutalement la feuille sous, ou selon les cas sur, le dispositif assurant les déplacements verticaux de ladite feuille. Pour éviter tout glissement de la feuille de verre, c'est toute la partie du convoyeur située au niveau du dispositif assurant les déplacements verticaux qui doit être simultanément arrêtée. Comme d'autre part, même dans des unités très automatisées, la cadence de traitement des feuilles n'est jamais parfaitement régulière, il est nécessaire d'opérer une détection du passage du verre en un point du convoyeur, par exemple peu après la sortie du four tunnel, afin de commander avec le temps de retard adéquat l'arrêt du convoyeur.

Le choix du système de détection se porte généralement sur des dispositifs n'entraînant aucun contact matériel entre le verre et le détecteur et donc aucun risque de constitution de défauts. Toutefois, il a été constaté par la demanderesse que les détecteurs optiques usuels sont insuffisamment fiables dans les conditions de température régnant dans une enceinte de bombage. En effet, à une température de l'ordre de 700°C, les rayons lumineux sont fortement diffractés et surtout toute légère variation de la température de l'enceinte entraîne une modification de l'angle de diffraction de sorte que le rayon n'est plus détecté.

Cette constatation a conduit la demanderesse à se détourner totalement de l'art antérieur pour proposer un détecteur essentiellement mécanique, insensible à la température ambiante.

Le document DE-B-1 900 988 reflète l'état de la technique le plus proche, tel que défini dans le préambule de la revendication 1. Il est connu de ce document un dispositif d'espacement de plaques véhiculées sur un convoyeur principal à rouleaux dans lequel les plaques sont chargées sur un convoyeur secondaire disposé au-dessus du convoyeur principal et susceptible d'être abaissé sous celui-ci. Lorsqu'une plaque arrive à la limite du convoyeur secondaire, elle vient buter sur un commutateur ce qui déclenche l'arrêt des rouleaux du convoyeur secondaire. Mais outre qu'il ne s'applique pas à des plaques à haute température, ce dispositif n'est pas un détecteur mais un butoir étant donné qu'il ne permet pas à la feuille de verre de poursuivre son trajet sur le convoyeur secondaire.

Le dispositif de détection selon l'invention est défini par les caractéristiques de la revendication 1. Le dispositif est formé par un doigt détecteur faisant saillie au dessus du plan du convoyeur, le long duquel les feuilles de verre sont véhiculées. Lorsque le bord avant d'une feuille de verre vient à la hauteur du doigt détecteur, le choc entraîne un mouvement de bascule du doigt conduisant à son escamotage et le déclenchement de son mouvement est enregistré par un capteur. Dès que le capteur capte un mouvement du doigt détecteur, ce dernier est instantanément escamoté afin de laisser poursuivre son trajet à la feuille de verre. De plus, l'enregistrement est transmis à la centrale de commande des dispositifs de l'installation dont fait partie le convoyeur. On détermine ainsi l'instant précis du passage de la feuille de verre en un point connu du convoyeur, c'est à dire à la verticale du dispositif de détection.

Avantageusement, le dispositif de détection selon l'invention est associé à un convoyeur formé par un lit de rouleaux, éventuellement cintrés. Dans ce cas, le doigt détecteur est monté par exemple sur une tige placée entre deux rouleaux parallèle à ceux-ci. D'une manière préférée, le doigt détecteur est monté directement sur un rouleau du convoyeur, non solidaire du mouvement de rotation des autres rouleaux et entraîné par le mouvement du doigt détecteur.

Il est à noter que l'invention ne doit néanmoins pas être limitée dans son application au cas des convoyeurs à rouleaux. Le rouleau détecteur selon l'invention peut être par exemple monté entre deux convoyeurs à bandes. Toutefois, étant donné que les convoyeurs à rouleaux sont les plus usités dans les installations de traitement de feuilles de verre portées à haute température, ce seul mode de réalisation est pris en compte dans la description détaillée qui suit, faite en référence aux dessins annexés, dans lesquels:

la figure 1 est une vue schématique en coupe transversale selon l'axe de symétrie du convoyeur d'un rouleau détecteur selon l'invention,

la figure 2 est une vue schématique de face du rouleau détecteur représenté à la figure 1.

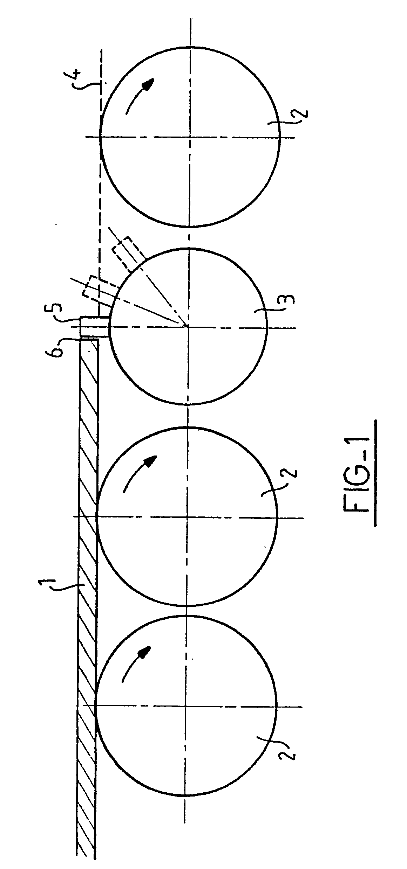

La feuille de verre 1, portée par exemple à sa température de ramollissement, est véhiculée sur un lit de rouleaux 2 dont on n'a représenté à la figure 1 que la partie entourant le rouleau détecteur 3. Ces rouleaux du convoyeur sont de manière connue constitués par exemple par un corps tubulaire éventuellement recouvert d'une gaine en tissu réfractaire; l'entraînement en rotation des rouleaux est assuré par exemple par une chaîne métallique engrenant sur des pignons solidaires des rouleaux et placés à une des extrémités desdits rouleaux. Le rouleau détecteur 3 est de préférence constitué par un corps tubulaire non recouvert par une gaine en tissu réfractaire. Il est d'un diamètre inférieur ou égal au diamètre des rouleaux constituant le convoyeur.

Le rouleau détecteur 3 est porteur d'une excroissance 5 qui, lorsqu'il se trouve en position active, fait saillie au dessus du plan 4 formé par les génératrices supérieures des rouleaux 2. Cette excroissance 5 est par exemple constituée par un doigt détecteur de dimensions très réduites et placée au niveau de l'axe longitudinal du lit de rouleaux 2, point de passage obligé pour toutes les feuilles de verre quelles que soient leurs dimensions. De préférence, cette excroissance 5 est formée par une barre courant sur toute la longueur du rouleau détecteur 3, ainsi, quelle que soit la position de la feuille de verre par rapport aux rouleaux, son passage à la verticale du rouleau détecteur est détectée. Pour ce qui concerne la hauteur de l'excroissance 5, elle est telle que le bord avant 6 de la feuille de verre vienne systématiquement en butée contre l'excroissance; on choisit ainsi de préférence des doigts d'une hauteur du même ordre que l'épaisseur usuelle des feuilles de verre, soit environ 3 mm.

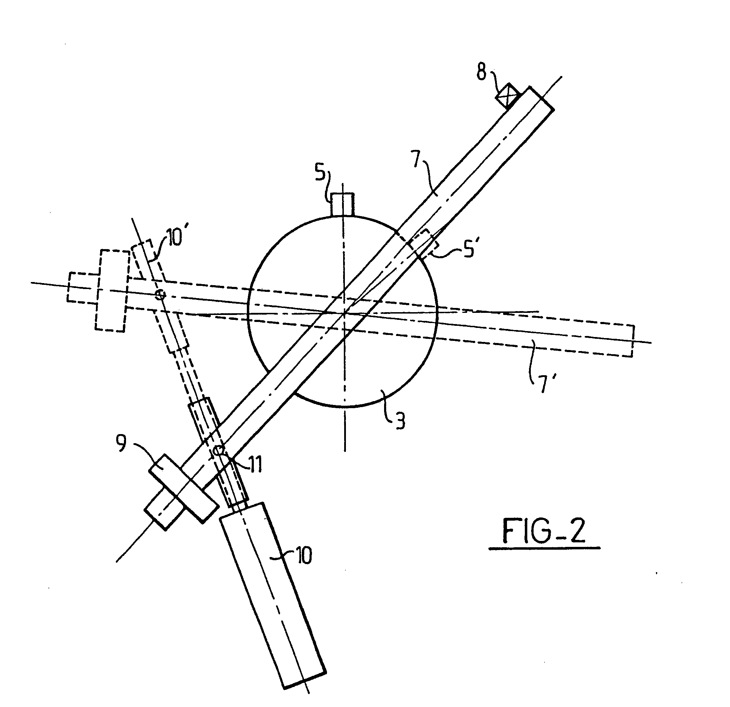

Une des extrémités du rouleau détecteur 3 est solidaire d'un bras de levier 7 représenté à la figure 2. Une des extrémité du bras de levier repose sur un détecteur de proximité 8, ou micro-contact, lorsque le rouleau détecteur est en position active, cest-à-dire lorsque le doigt détecteur est prêt à intercepter une feuille de verre. Le bras de levier 7 est lesté à son autre extrémité par un contre poids d'équilibrage 9. Un vérin 10 est articulé en 11 sur le bras de levier.

Le dispositif fonctionne de la manière suivante. Lorsque le bord avant 6 de la feuille de verre 1 heurte le doigt détecteur 5, le choc entraîne un mouvement de rotation du rouleau détecteur 3, monté pratiquement sans frottement, et de ce fait, le bras de levier s'écarte légèrement du détecteur de proximité 8. Il va de soi que ce choc entre le doigt détecteur 5 et le bras avant de la feuille de verre se produit irrémédiablement et est parfaitement indépendant des conditions de température, de pression ou de la nature des gaz ambiants. Dès que le contact avec le détecteur 8 a cessé, un ordre est transmis électriquement ou de façon pneumatique par le détecteur de proximité, le bras du vérin de rappel 10 est déployé et ainsi, le mouvement du rouleau détecteur 3 est instantanément amplifié. Les positions des differents éléments après ce mouvement de bascule amplifié sont représentées en traits interrompus. L'écart angulaire entre le position active et la position basculée du doigt détecteur doit être tel que le doigt détecteur 5 passe une fois basculé en dessous du plan 4, ainsi la feuille de verre peut continuer librement sa course, en étant entraînée par les rouleaux du convoyeur 2 situés an amount ou en aval du rouleau détecteur. Le fait d'utiliser un rouleau détecteur sans gaine de revêtement et éventuellement avec un corps tubulaire d'un diamètre inférieur à celui des autres rouleaux, supprime tout frottement avec la feuille de verre. De préférence toutefois, le rouleau détecteur est d'un diamètre peu inférieur à celui des autres rouleaux et construit comme ceux-ci en silice. Ainsi, il ne se produit pas de déformation à haute température du rouleau détecteur, et il est suffisamment résistant en torsion pour être couplé au bras de levier. De plus, ce choix permet de monter un système de détection selon l'invention sans modification importante d'un convoyeur à rouleaux déjà en place. Enfin, un tel rouleau assure un soutien permanent aux feuilles de verre trop fortement échauffées et qui fléchiraient sous leur propre poids.

Seul le bord avant de la feuille de verre risque un éventuel marquage mais étant donné que ce bord est invisible une fois le vitrage mis en place, ce marquage n'affecte absolument pas la qualité optique du verre.

Après un retard correspondant au minimum au temps nécessaire au passage de la totalité de la feuille de verre au dessus du rouleau détecteur, le vérin 10 est désactivé et sous l'effet moteur du contre poids d'équilibrage est replié, le rouleau détecteur 3 reprend sa position active, prêt pour la détection de la feuille suivante.

Ainsi, la cessation du contact avec le détecteur de proximité 8, due au choc entre le bord avant de la feuille de verre et le doigt détecteur 5 détermine le temps zéro de l'horloge d'une centrale de commande qui déclenche avec les retards adéquats par exemple l'arrêt du convoyeur ou plus précisément de certains rouleaux de celui-ci, le déclenchement de l'opération de bombage par exemple la mise en place d'une dépression au dessus de la feuille de verre ou encore d'un courant gazeux sous la feuille de verre, l'abaissement d'une forme supérieure d'aspiration, l'approche d'un cadre de bombage, cette énumération n'ayant bien entendu aucun caractére exhaustif.

Comme indiqué précisément, le retour en position active du doigt détecteur peut selon une première mise en œuvre de l'invention être déclenché par la centrale de commande à partir de l'indication du temps zéro, c'est-à-dire de la bascule du doigt détecteur. Suivant une autre mise en œuvre de l'invention, on peut utiliser deux rouleaux détecteurs selon l'invention, placés à distance l'un de l'autre. Dans ce cas, la bascule du rouleau détecteur amont due au passage de la feuille suivante, déclenche immédiatement le retour en position active du rouleau détecteur aval dont la bascule déclenche elle-même le retour en position active du rouleau détecteur amont.

Enfin, le retour en position active du rouleau détecteur peut aussi être commandé par un détecteur optique placé en amont, si possible en dehors d'une zone chaude ou dont le rayon lumineux balaye une large surface de sorte que la détection de la présence de la feuille de verre suivante est assurée même si sa position exacte n'est pas déterminée.

Comme le montre le description précédente, le système de détection selon l'invention comporte dans l'enceinte chauffée uniquement des éléments mécaniques. Le détecteur de proximité commandant le vérin de rappel et la centrale de commande sont de préférence et sans aucune difficulté placé à l'extérieur de l'enceinte chauffée; leur fonctionnement n'est ainsi pas perturbé par les conditions de température et de plus leur éventuel remplacement peut ainsi être effectué à tout instant.

Un grand avantage du système de détection selon l'invention vient de ce qu'il peut être mis en œuvre sur tout convoyeur à rouleaux ou entre deux convoyeurs d'un type quelconque d'une installation déjà existante sans que cette installation n'ait à être modifiée d'une manière importante.

## Revendications

1. Dispositif de détection d'une feuille de verre véhiculée sur un convoyeur, notamment sur un convoyeur à rouleaux, constitué d'un doigt (5) faisant saillie en position active au-dessus du plan du convoyeur, caractérisé en ce qu'il comporte un dispositif d'escamotage du doigt détecteur et un capteur enregistrant le mouvement du doigt détecteur sous l'action de la feuille de verre, l'enregistrement du mouvement du doigt détecteur étant transmis à une centrale de commande et déclenchant de plus l'escamotage instantané du doigt détecteur afin de laisser poursuivre son trajet à la feuille de verre.

2. Dispositif de détection selon la revendication 1, caractérisé en ce que le capteur enregistrant le mouvement du doigt détecteur (5) est un détecteur de proximité (8).

3. Dispositif de détection selon la revendication 2, caractérisé en ce que le doigt détecteur est relié au détecteur de proximité (8) par un bras de levier (7).

4. Dispositif de détection selon la revendication 3, caractérisé en ce que ledit bras de levier (7) est lesté à une extrémité par un contre-poids d'équilibrage (9).

5. Dispositif de détection selon la revendication 4, caractérisé en ce que le dispositif d'escamotage du doigt détecteur est constitué par un vérin (10) articulé sur le bras de levier (7).

6. Dispositif de détection selon la revendication 5, caractérisé en ce que le vérin (10) est monté d'une manière telle qu'il est déployé dès que le détecteur de proximité (8) capte un mouvement du doigt détecteur (5) qui est instantanément escamoté, qui passe alors en position basculée, sous le plan du passage des feuilles de verre.

7. Dispositif de détection selon la revendication 6, caractérisé en ce que le retour en position active du doigt détecteur à partir de la position basculée est dû à la désactivation du vérin (10) commandé par une cellule photoélectrique placée en amont du dispositif de détection et détectant le passage d'une feuille de verre suivante dans sa zone d'action.

8. Dispositif de détection selon une des revendications précedentes caractérisé en ce que le convoyeur des feuilles de verre étant un convoyeur à rouleaux (2), le doigt détecteur (5) est monté sur un des rouleaux du convoyeur, dit rouleau détecteur (3), désolidarisé du mouvement des autres rouleaux (2).

9. Dispositif de détection selon la revendication 8, caractérisé en ce que ledit rouleau détecteur (3) est d'un diamètre inférieur à celui des autres rouleaux (2) du convoyeur.

10. Application du dispositif de détection suivant une des revendications précédentes à la détection de feuilles de verre véhiculées dans une enceinte chauffée à une température supérieure à 400°C, notamment une enceinte de formage ou de traitement thermique des feuilles de verre.

## Patentansprüche

1. Vorrichtung zur Ermittlung einer auf einem Förderer, insbesondere Rollenförderer, transportierten Glasscheibe, welche einen in seiner wirksamen Stellung über die Ebene des Förderers vorstehenden Finger aufweist, dadurch gekennzeichnet, dass die Vorrichtung eine Wegführeinrichtung für den Detektorfinger und einen Aufnehmer zur Registrierung der Bewegung des Detektorfingers unter dem Einfluss der Glasscheibe aufweist, und dass die Aufnahme der Bewegung des Detektorfingers zu einer Steuerzentrale überführt wird und ferner die augenblickliche Wegführung des Detektorfingers auslöst, so dass die Glasscheibe auf ihrer Bahn fortlaufen kann.

2. Vorrichtung nach Anspruch 1, dadurch gekennzeichnet, dass der Aufnehmer zur Registrierung der Bewegung des Detektorfingers (5) durch einen Näherungsdetektor (8) gebildet ist.

3. Vorrichtung nach Anspruch 2, dadurch gekennzeichnet, dass der Detektorfinger mit dem Näherungsdetektor (8) durch einen Hebelarm (7) verbunden ist.

4. Vorrichtung nach Anspruch 3, dadurch gekennzeichnet, dass der Hebelarm (7) an einem Ende durch ein Ausgleichsgewicht (9) beschwert ist.

5. Vorrichtung nach Anspruch 4, dadurch gekennzeichnet, dass die Vorrichtung zum Wegführen des Detektorfingers durch einen am Hebelarm (7) angelenkten Stellzylinder (10) gebildet ist.

6. Vorrichtung nach Anspruch 5, dadurch gekennzeichnet, dass der Stellzylinder (10) derart angeordnet ist, dass er ausgefahren wird sobald der Näherungsdetektor (8) eine Bewegung des Detektorfingers (5) feststellt, der augenblicklich in eine Kippstellung unter die Transportebene der Glasscheiben weggeführt wird.

7. Vorrichtung nach Anspruch 6, dadurch gekennzeichnet, dass die Rückführung des Detektorfingers in seine wirksame Stellung aus der Kippstellung durch Entaktivierung des Stellzylinders (10) erfolgt, welcher von einem Fotoelement gesteuert wird, das vor der Vorrichtung angeordnet ist und den Durchgang einer Glasscheibe durch seinen Wirkungsbereich feststellt.

8. Vorrichtung nach einem der vorhergehenden Ansprüche, dadurch gekennzeichnet, dass der Förderer für die Glasscheibe von einem Rollenförrer (2) gebildet ist, dass der Detektorfinger (5) auf einer der Förderrollen angeordnet ist und dass die Detektorrolle (37 von der Bewegung der anderen Rollen (2) abgekoppelt ist.

9. Vorrichtung nach Anspruch 8, dadurch gekennzeichnet, dass die Detektorrolle (3) einen Durchmesser kleiner als der der anderen Rollen (2) des Förderers aufweist.

10. Verwendung der Vorrichtung nach einem der vorhergehenden Ansprüche zur Ermittlung von Glasscheiben, die in einer auf eine Temperatur grösser als 400 Grad Celsius erhitzten Kammer, insbesondere einer Kammer zur Bearbeitung oder Wärmebehandlung von Glasscheiben, transportiert werden.

**Claims**

1. A device for detecting a glass sheet carried on a conveyor, such as a roller conveyor, comprising a finger (5) extending in an active position above the plane of the conveyor, characterised in that it comprises a device for retracting the detector finger and a detector recording movement of the finger caused by the glass sheet, recording of movement of the finger being transmitted to a control unit and causing immediate retraction of the finger to allow the glass sheet to continue its path of travel.

2. A device according to claim 1, characterised in that the detector recording movement of the finger (5) is a proximity detector (8).

3. A device according to claim 2, characterised in that the finger is connected to the proximity detector (8) by a lever arm (7).

4. A device according to claim 3, characterised in that the lever arm (7) is weighted at one end by a balancing counter-weight (9).

5. A device according to claim 4, characterised in that the device for retracting the finger comprises a jack (10) articulated on the lever arm (7).

6. A device acording to claim 5, characterised in that the jack (10) is mounted so that it is operated as soon as the proximity detector (8) detects movement of the finger (5) which is immediately retracted and passes to a tilted position below the plane of passage of the glass sheets.

7. A device according to claim 6, characterised in that return of the finger to its active position from the tilted position is effected on deactuation of the jack (10) controlled by a photoelectric cell placed upstream of the detection device and detecting passage of a following glass sheet in its zone of operation.

8. A device according to any one of the preceding claims, characterised in that, the conveyor for the glass sheet being a roller (2) conveyor, the finger (5) is mounted on one of the rollers of the conveyor, called a detector roller (3), which is capable of moving independently of the other rollers.

9. A device according to claim 8, characterised in that said detector roller (3) has a diameter less than that of the other rollers of the conveyor.

10. Application of a detecting device according to any one of the preceding claims to detection of glass sheets carried in an enclosure heated to a temperature above 400°C, such as an enclosure for shaping or heat treatment of glass sheets.

FIG-1

FIG-2